# DEMANDE DE BREVET EUROPEEN

(11) **EP 0 779 525 A1**
(43) Date de publication de la demande: **18.06.1997**
(21) Numéro de dépôt: 96402693.4
(22) Date de dépôt: 11.12.1996
(51) Int. Cl.: G02B 6/38, G02B 6/42

(54) **Dispositif pour l'injection d'un faisceau laser de puissance dans une fibre optique**

(30) Priorité: 13.12.1995 FR 9514746
(71) Demandeur: COMMISSARIAT A L'ENERGIE ATOMIQUE, 75015 Paris (FR)
(72) Inventeur: Alfille,Jean-Pascal, 92140 Clamart (FR); Schildknecht,Jacques, 91300 Massy (FR); Stockmann,Bernard, 91700 Ste Genevieve des Bois (FR)
(74) Mandataire: Dubois-Chabert, Guy

(57) **Abrégé**

L'invention concerne un dispositif de connexion pour l'injection d'un faisceau laser dans une fibre optique, caractérisé en ce qu'il comporte :
- deux demi-pinces (74, 76) destinées à recevoir une extrémité de la fibre optique en une position de serrage,
- un corps de connecteur (66, 72) pour recevoir les deux demi-pinces et les maintenir en position de serrage de la fibre optique,
- des moyens de refroidissement des deux demi-pinces.

Des moyens pour faciliter la maintenance de la fibre (montage/démontage de la fibre) sont prévus.

## Description

### Domaine technique et art antérieur

L'invention concerne le domaine des connecteurs de fibre optique, permettant d'introduire un faisceau laser dans une fibre optique.

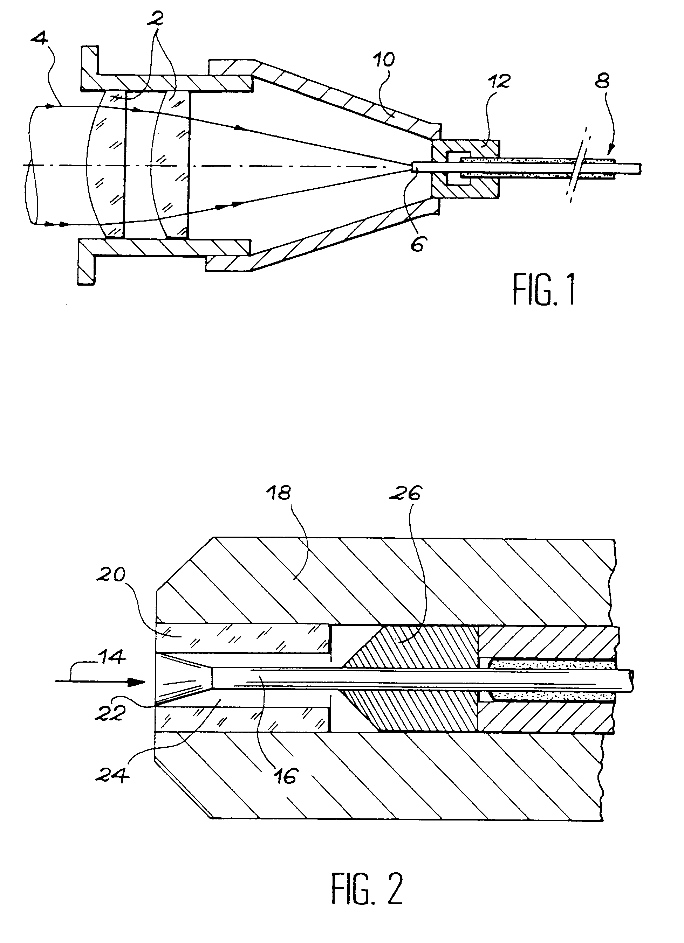

Un schéma de principe d'un dispositif d'injection d'un faisceau laser dans une fibre optique est présenté en figure 1. Sur ce schéma, le dispositif se compose :
- d'un système optique convergent 2 permettant de focaliser un faisceau laser incident 4 sur la face d'entrée 6 d'une fibre 8,
- d'une liaison mécanique ajustable 10 (bague d'interface) entre le système optique 2 et le connecteur de fibre 12, permettant des réglages de centrage du faisceau focalisé sur la face d'entrée de la fibre,
- enfin du connecteur 12 de fibre optique, qui a pour fonction première de réaliser une liaison entre un composant optique (l'extrémité de la fibre optique) et la liaison mécanique 10.

Le document US-5 291 570 décrit un connecteur de fibre pour laser de puissance continu représenté schématiquement sur la figure 2. Un faisceau laser 14 pénètre dans une fibre optique 16 par une de ses extrémités. La partie extérieure du connecteur est constituée par un corps 18. L'extrémité de la fibre est chanfreinée et protégée par un manchon 20. Ce dernier est réalisé en une matière transparente à la longueur d'onde du faisceau laser 14. La référence 22 désigne la zone de contact du manchon sur l'extrémité de la fibre.

Au-delà de cette zone de contact 22, la fibre 16 et le manchon 20 sont séparés par un espace d'air 24. La fraction du faisceau 14 ne pénétrant pas à l'intérieur de la fibre traverse le manchon transparent 20. Ce faisceau parasite est réfléchi par la pièce 26, vers le corps 18. Ce dernier est construit en un matériau bon conducteur de la chaleur.

Le document DE-40 28305 présente un connecteur de fibre pour laser de puissance. Ce dispositif a pour objectif de centrer automatiquement l'extrémité de la fibre par rapport au faisceau incident. Une pince spéciale bimétallique, à trois branches, exerce une force radiale sur l'extrémité de la fibre lorsque l'une des branches reçoit une fraction plus importante du faisceau. Ainsi, le centrage du faisceau est automatique.

Bien que satisfaisants à certains égards, ces deux dispositifs posent néanmoins des problèmes, notamment lors de l'utilisation de lasers de puissance, par exemple un laser YAG impulsionnel. Le laser YAG émet un faisceau à la longueur d'onde 1,06 µm, qui peut être transporté par une fibre optique. Le diamètre des fibres utilisées est en général de 1 mm pour un laser YAG impulsionnel de 1 kW.

Par rapport au laser YAG continu, la puissance moyenne du laser YAG impulsionnel industriel est, actuellement, moindre (1 à 2 kW). De même, la qualité de son faisceau est moins bonne.

Le laser YAG impulsionnel se caractérise par trois paramètres qui régissent l'impulsion laser :
- l'énergie par impulsion (par exemple de 1 à 140 J),
- la durée de l'impulsion (par exemple de 0,5 à 20 ms),
- la fréquence de répétition (par exemple de 1 à 500 Hz).

Les différentes grandeurs "énergétiques" caractérisant le faisceau laser YAG impulsionnel sont :
- la puissance moyenne (W) (énergie par impulsion)x(fréquence de répétition),
- l'énergie par impulsion (J),
- la puissance crête (kW) (énergie par impulsion)/(durée de l'impulsion).

La technologie du YAG impulsionnel est particulièrement intéressante car il est possible de moduler et d'optimiser les paramètres impulsionnels pour chaque cas d'application et d'atteindre de bonnes performances, en découpe, soudage, traitement de surface et perçage.

Par exemple, en transportant le faisceau par fibre optique (de diamètre 1 mm), il est possible de réaliser une découpe d'une plaque de 30 mm d'acier inoxydable, assistée par un jet d'oxygène, au moyen des paramètres suivants :
- puissance moyenne : 900 W,
- énergie par impulsion : 90 J,
- puissance crête : 18 kW.

Des paramètres énergétiques encore plus élevées que ceux présentés ci-dessus sont envisagés dans le domaine du démantèlement des installations nucléaires par laser YAG impulsionnel.

Par exemple, en tir direct (c'est-à-dire sans transport du faisceau par fibre optique), à 1300 W de puissance moyenne, 130 J par impulsion et 22 kW de puissance crête, il est possible d'atteindre une épaisseur découpée de 50 mm (acier inoxydable 304L), associée à une bonne qualité de découpe.

D'autre part, les progrès constants de la technologie du laser YAG industriel, permettent d'atteindre aujourd'hui des puissances moyennes de 2000 W, des énergies par impulsion de 200 J. Des prototypes de 3000 W sont en cours de développement.

Si un faisceau laser YAG impulsionnel, présentant des paramètres énergétiques élevés, est utilisé en combinaison avec une fibre optique dont l'extrémité est maintenue dans un connecteur tel que ceux décrits dans l'art antérieur, alors la durée de vie de face d'entrée de la fibre est très courte. Ainsi, pour une puissance moyenne de 900 W, une énergie par impulsion de 90 J et une puissance crête de 18 kW, la durée de vie de la face d'entrée de la fibre est d'environ 5 minutes. Un échauffement de la fibre jusqu'à sa température de ramollissement est constaté, et la face d'entrée de la fibre se sublime petit à petit jusqu'à sa destruction complète. Il est donc nécessaire de trouver un connecteur fibre optique permettant de résoudre ce problème.

En outre, il se pose également un problème de maintenance de la face d'entrée de la fibre qui, même si elle n'est pas détruite, a besoin d'être contrôlée, voire repolie. Les causes d'une reprise de polissage de la face d'entrée sont multiples. Ce sont par exemple :
- des paramètres lasers énergétiques qui dégradent lentement la face d'entrée de la fibre,
- d'éventuelles poussières qui se déposent sur la face d'entrée de la fibre, en créant localement des points chauds,
- une légère défocalisation axiale du faisceau sur la face d'entrée de la fibre, ce qui a pour conséquence d'échauffer la périphérie de la fibre,
- une légère défocalisation transverse du faisceau sur la face d'entrée de la fibre, qui a pour conséquence un échauffement dissymétrique sur un bord de la fibre,
- des microrayures résiduelles, provenant d'un polissage précédent, qui diminuent la durée de vie de la face d'entrée,
- des traces résiduelles de solvant, provenant d'un nettoyage antérieur, qui nuisent à la durée de vie de la face d'entrée de la fibre.

Ces différentes causes, qui nécessitent donc une reprise de polissage de la face d'entrée de la fibre, sont, dans la pratique, plus ou moins cumulées et difficilement identifiables, surtout lorsque la face d'entrée de la fibre est réellement endommagée.

Par conséquent, la fibre doit pouvoir être démontée de son connecteur avant d'être repolie, puis remontée dans son connecteur après polissage. Au cours de cette opération, il faut le plus possible éviter tout risque de détérioration de la face d'entrée de la fibre, tel que les risques d'éclat pouvant se produire si la face d'entrée entre en contact avec un autre élément du dispositif optique.

### Exposé de l'invention

L'invention a pour objet un dispositif de connexion d'une fibre optique ou dispositif de connexion pour l'injection d'un faisceau laser dans une fibre optique, caractérisé en ce qu'il comporte :
- deux demi-pinces destinées à recevoir une extrémité de la fibre optique en une position de serrage,
- un corps de connecteur pour recevoir les deux demi-pinces et les maintenir en position de serrage de la fibre optique,
- des moyens de refroidissement des deux demi-pinces.

Du fait de l'utilisation d'une pince en deux parties, destinée à recevoir la fibre en position de serrage, un contact thermique efficace est réalisé entre la pince et l'extrémité de la fibre. La pince étant refroidie, le risque de ramollissement et de destruction de l'extrémité de la fibre est éliminé.

Un refroidissement efficace permet en outre de travailler avec des fibres de diamètre plus petit et d'accepter un polissage de moindre qualité pour l'extrémité de la fibre.

Comme, par ailleurs, la pince est réalisée en deux parties, il est possible de l'ouvrir afin d'accéder directement à la fibre sans l'endommager.

Dans les connecteurs de l'art antérieur, le polissage s'effectue avec le connecteur. Il peut donc rester des fragments d'abrasif à l'interface entre l'extrémité de la fibre et la partie mécanique du connecteur. Ces dépôts d'abrasif peuvent migrer sur la face d'entrée de la fibre, au cours de temps. En outre, le nettoyage de l'extrémité de la fibre est difficile à effectuer parfaitement, lorsque celle-ci se trouve intégrée à un système mécanique, puisque l'accessibilité à l'extrémité est limitée, voire impossible.

Avec le système de connecteur selon l'invention, la fibre peut être retirée de la pince. Ainsi, avant de la remonter dans le connecteur, après reprise en polissage de la face d'entrée, il est possible de la nettoyer parfaitement sur une longueur de plusieurs centimètres. En outre, lorsque la fibre est remontée dans la pince, après repolissage, le risque d'endommagement de l'extrémité de la fibre contre l'élément qui lui sert de support est très limité.

Ainsi, les moyens prévus facilitent les opérations de montage et démontage de la fibre, donc la maintenance de la fibre.

Selon un mode particulier de réalisation, le corps, destiné à recevoir les deux demi-pinces, est d'une seule pièce.

Le système de refroidissement peut alors comporter des moyens de refroidissement du corps, ce dernier refroidissant à son tour les deux demi-pinces par conduction.

Les deux demi-pinces peuvent être de forme tronconique, le corps comportant une portée de forme également tronconique destinée à recevoir les deux demi-pinces.

En outre, des moyens de réglage du serrage des deux demi-pinces contre la portée tronconique peuvent être prévus.

De tels moyens comportent par exemple une vis creuse destinée à être vissée sur le corps.

Selon un autre mode de réalisation, le corps, destiné à recevoir les deux demi-pinces, est formé lui-même de deux pièces, chacune étant apte à recevoir une demi-pince.

Ce second mode de réalisation permet d'éviter encore plus les risques de contact de la face d'entrée de la fibre avec un autre élément. En effet, c'est alors non seulement la pince qui peut s'ouvrir en deux parties, mais également le connecteur lui-même.

Un canal de circulation d'un fluide de refroidissement peut alors être prévu dans le corps, le fluide étant amené au contact des demi-pinces pour venir les lécher.

Ce système de refroidissement est encore plus efficace que celui déjà décrit ci-dessus, en liaison avec le premier mode de réalisation.

Des moyens peuvent être prévus, pour appuyer les demi-pinces contre la fibre, suivant une direction sensiblement perpendiculaire à un axe défini par la position de la fibre.

De tels moyens peuvent par exemple comporter au moins un ressort en compression entre l'une des deux demi-pinces et celle des deux pièces du corps destiné à recevoir cette demi-pince.

La mise en oeuvre de ces moyens pour appuyer les demi-pinces contre la fibre permet d'accroître encore l'efficacité du refroidissement.

Chaque demi-pince peut se présenter sous la forme d'un barillet comportant plusieurs empreintes, adaptées à des diamètres de fibre différents. Ainsi, il n'est pas nécessaire de changer les demi-pinces lorsqu'une fibre d'un autre diamètre doit être mise en oeuvre : le connecteur est déjà adapté à différents diamètres de fibres.

Après démontage de la fibre, il est avantageux de ne pas avoir à recentrer celle-ci par rapport au faisceau laser incident. Par conséquent, le corps du connecteur est avantageusement maintenu en position fixe par rapport au laser. Dans le cas du second mode de réalisation, c'est l'une des deux pièces dont est formé le corps qui pourra être maintenue en position fixe par rapport au laser.

### Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :
- la figure 1 représente schématiquement une fibre optique, un connecteur et un faisceau laser incident,
- la figure 2 représente un connecteur selon l'art antérieur,
- les figures 3 à 4B illustrent un premier mode de réalisation d'un connecteur selon l'invention,
- les figures 5A à 5C illustrent un autre mode de réalisation d'un connecteur selon l'invention,
- la figure 6 représente un corps en deux parties, ainsi que deux demi-pinces, pour un connecteur selon l'invention,
- la figure 7 représente, schématiquement, une demi-pince pour un connecteur selon l'invention,
- la figure 8 représente les variations, en fonction du temps, de la température d'une pince, dans un connecteur selon l'invention.

### Description détaillée de modes de réalisation de l'invention

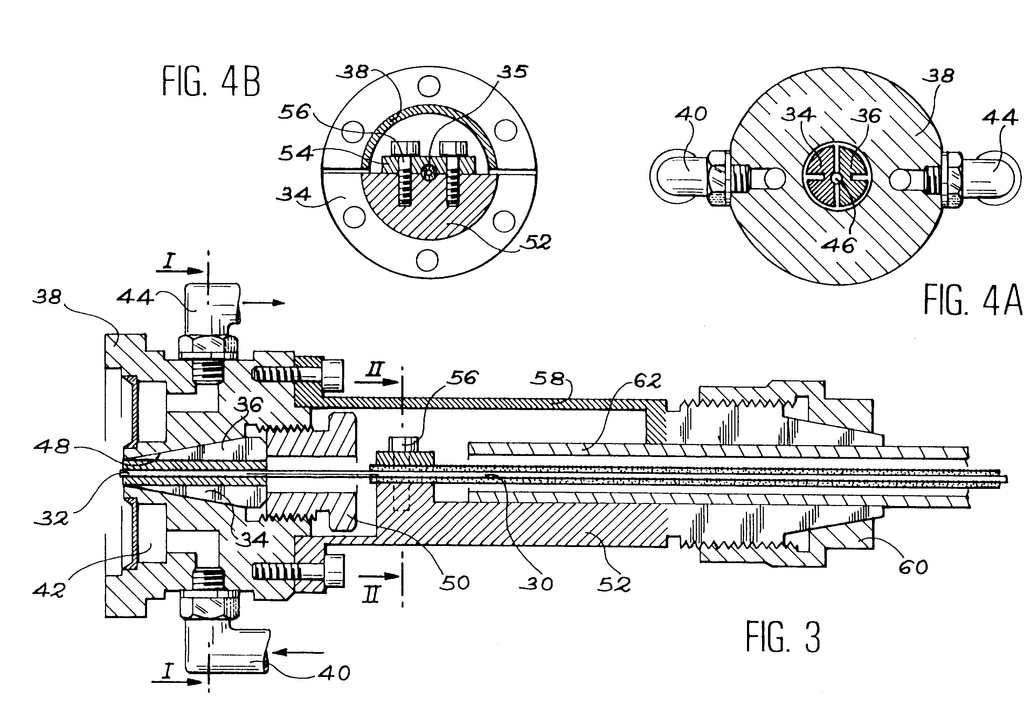

Un premier mode de réalisation va être décrit en liaison avec les figures 3 à 4B. Les figures 4A et 4B sont des vues en coupe respectivement suivant les plans I-I et II-II.

Sur ces figures, l'extrémité 32 d'une fibre optique 30 est reçue en position de serrage entre deux demi-pinces 34, 36, de forme sensiblement conique ou tronconique. Ces deux pinces sont montées à l'intérieur d'un corps 38. Ce dernier est d'une seule pièce, et intègre une circulation d'eau pour le refroidissement de l'extrémité de la fibre. L'eau entre par le conduit 40, circule dans une chemise 42 et ressort du corps 38 par le conduit 44. Par conduction, le corps 38 refroidit les deux demi-pinces 34, 36, qui refroidissent à leur tour l'extrémité 32 de la fibre 30. Les deux demi-pinces 34, 36 présentent une empreinte 46 adaptée au diamètre de la fibre optique.

Le corps 38 comporte un évidement ou portée 48 destiné à recevoir les demi-pinces 34, 36. Des moyens de réglage du serrage des deux demi-pinces contre cette portée peuvent être prévus : un bon serrage permet un bon contact thermique entre les demi-pinces et le corps 38, et par conséquent un bon refroidissement de l'extrémité de la fibre. Dans l'exemple de la figure 3, ces moyens de serrage comportent essentiellement une vis creuse 50, qui se visse à l'intérieur du corps 38.

La fibre repose par ailleurs sur un demi-berceau inférieur 52, qui permet d'immobiliser la partie non dénudée de la fibre. Comme illustré sur la figure 4B, la fibre est plaquée sur le demi-berceau inférieur 52 au moyen d'une bride 54 et de deux vis de serrage 56.

Un demi-capot supérieur 58 vient coiffer le demi-berceau inférieur 52.

Un écrou 60 remplit une fonction de presse-étoupe. Sous l'effet du serrage de cet écrou, la partie arrière du demi-berceau 52 et du demi-capot 58 se déforme pour venir serrer une gaine métallique souple 62 de protection.

Ce dispositif permet d'obtenir un refroidissement satisfaisant de l'extrémité de la fibre optique, lorsqu'un faisceau laser impulsionnel de puissance, notamment un faisceau laser YAG, y est introduit.

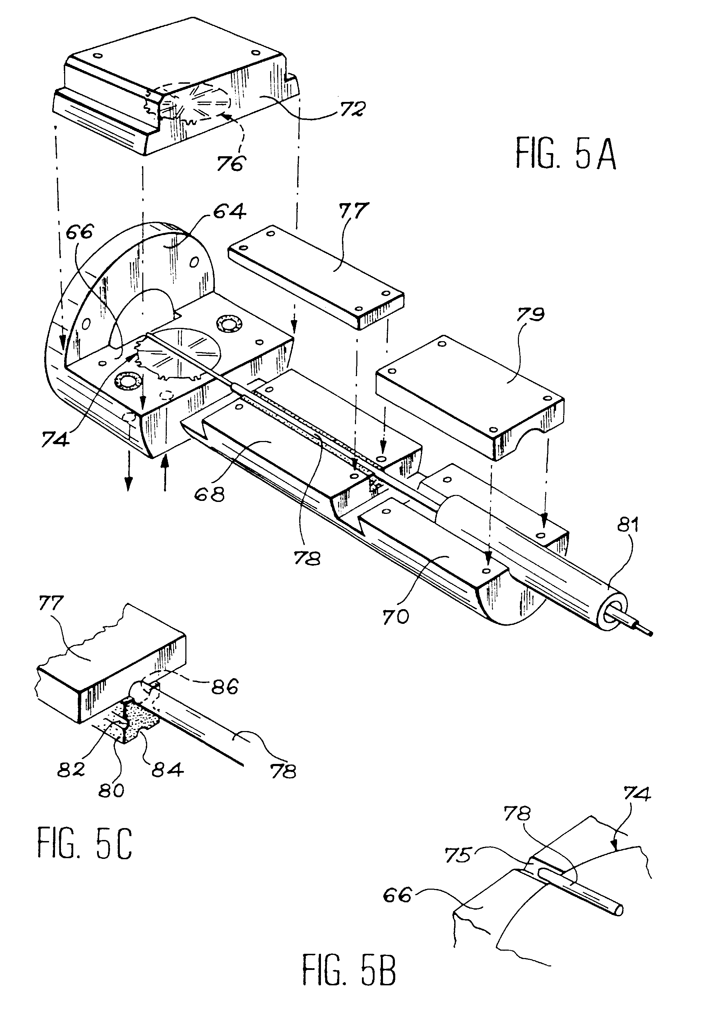

Un autre mode de réalisation va être décrit, en liaison avec les figures 5A à 5C.

Sur la figure 5A, le connecteur de fibre optique se compose d'un demi-connecteur inférieur 64, tronçonné suivant son plan médian. Ce demi-connecteur est divisé en trois parties 66, 68, 70. Pour compléter le connecteur, trois sous-ensembles indépendants 72, 77, 79 viennent coiffer le demi-connecteur 64. Ainsi, la partie 72 est appliquée contre la partie 66, la partie 77 est montée sur la partie 68 et la partie 79 sur la partie 70.

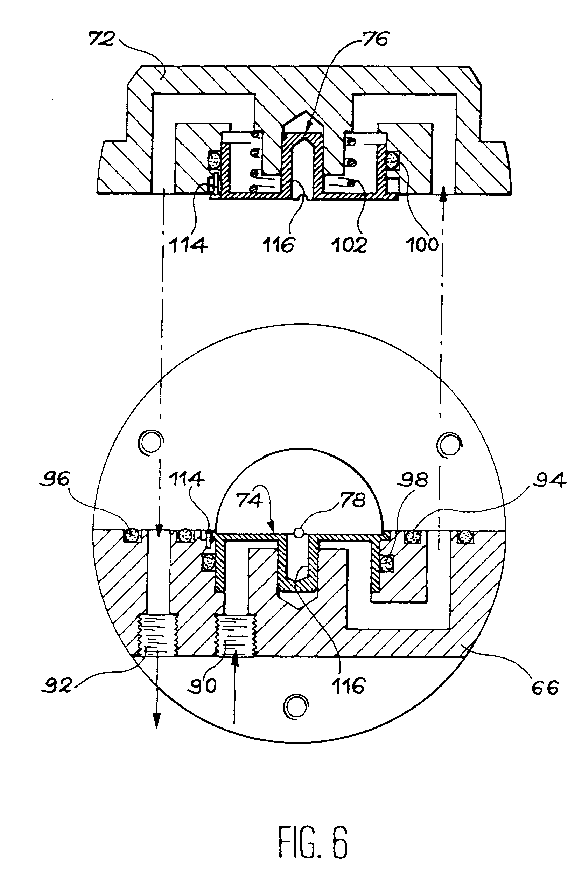

Dans la partie avant du connecteur, un corps de connecteur est formé par les deux parties inférieure et supérieure 66, 72 également appelée demi-corps inférieur et supérieur. Dans chacune de ces parties vient s'insérer une demi-pince 74, 76 qui refroidissent, à leur tour, l'extrémité de la fibre. Comme on le voit de manière plus précise sur la figure 6, un circuit de circulation d'un fluide de refroidissement (en général de l'eau) est prévu dans les deux parties 66, 72 du corps, de façon à ce que le fluide vienne lécher chacune des deux demi-pinces 74, 76. Le liquide de refroidissement pénètre par l'orifice 90, vient refroidir la pince inférieure 74, puis passe dans le demi-corps supérieur 72 pour refroidir la pince supérieure 76, et repasse enfin dans le demi-corps inférieur 66 pour ressortir par un orifice 92. Des joints toriques 94, 96 réalisent l'étanchéité entre le demi-corps 66 et le demi-corps 72. Par ailleurs, des joints toriques 98, 100 permettent de réaliser l'étanchéité entre chacun des deux demi-corps 66, 72 et la demi-pince correspondante 74, 76. Dans la partie supérieure, un ressort 102 est placé en compression entre le demi-corps 72 et la demi-pince 76 correspondante. Ce ressort permet de réaliser automatiquement, lors du montage du demi-corps supérieur sur le demi-corps inférieur un bon contact et donc un bon échange thermique, entre l'extrémité de la fibre et les deux demi-pinces 74, 76. Ce bon contact favorise un bon échange thermique, et un bon refroidissement de l'extrémité de la fibre.

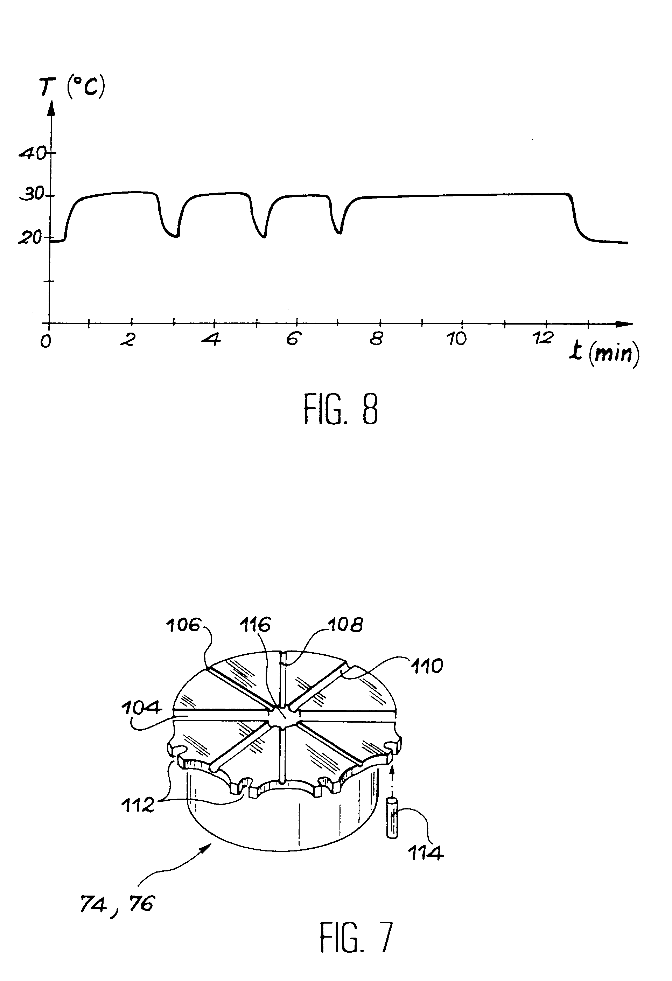

Chaque demi-pince peut avoir la forme d'un barillet et être dotée d'empreintes, désignées sur la figure 7 par les références 104, 106, 108, 110. Ces empreintes ont des tailles différentes et sont donc adaptées à différents diamètres de fibres. Chaque position de fibre est indexée au moyen d'un embrèvement 112 dans les deux demi-pinces 74, 76, et de deux pions 114 (voir figure 6), qui sont chacun situés dans un demi-corps 66, 72. Ces pions réalisent aussi le centrage du demi-corps 72 sur la surface supérieure du demi-corps inférieur 66. Des taraudages 116 (voir figure 6), dans le centre de chaque demi-pince 74, 76 ont pour fonction de permettre d'extraire les demi-pinces de leurs indexages 112,114. Il est alors possible, par rotation des demi-pinces, de faire coïncider une nouvelle empreinte correspondant à un changement de diamètre de la fibre.

La figure 5B représente comment l'extrémité de la fibre 78, en sortie de la demi-pince 74, passe dans une empreinte 75 pratiquée dans le demi-corps 66. Cette empreinte a pour fonction d'éviter que l'extrémité de la fibre 78 ne vienne en contact avec le demi-corps inférieur 66 ou le demi-corps supérieur 72. Ce dernier possède la même empreinte.

Dans la partie centrale du connecteur, le couvercle 77, fixé sur la partie 68, permet de brider la fibre 78 sur le demi-connecteur inférieur. Par ailleurs, un adaptateur 80 est prévu, qui reçoit la fibre 78. L'extrémité de cet adaptateur est représentée plus en détail sur la figure 5C : on peut ainsi voir qu'il présente des gorges 82, 84, 86 ayant des diamètres différents, de façon à pouvoir recevoir des fibres de différentes tailles.

Dans la partie arrière du connecteur, un couvercle 79 est placé sur la surface 70. Cette partie arrière a pour fonction de brider une gaine métallique souple 81 de protection de la fibre optique. Cette gaine métallique protège aussi les utilisateurs contre le rayonnement laser, en cas de rupture de la fibre.

Un capot, non représenté sur la figure 5A, vient coiffer l'ensemble du connecteur.

Dans tous les modes de réalisation décrits ci-dessus, le corps ou l'un des demi-corps peut être prévu pour rester à demeure sur le laser pendant toute opération de maintenance de la fibre. Ceci évite d'avoir à recentrer l'extrémité de la fibre par rapport au faisceau incident après un démontage de la fibre.

Un connecteur selon le premier mode de réalisation, tel que décrit ci-dessus en liaison avec la figure 3 à 4B, a été testé. Afin de pouvoir réaliser une comparaison, il faut rappeler que la durée de vie de l'extrémité d'une fibre n'est que d'environ 5 minutes avec un connecteur selon l'art antérieur, pour les conditions de paramètres énergétiques suivantes :
- puissance moyenne : 900 W,
- énergie par impulsion : 90 J/impulsion,
- puissance crête : 18 kW.

Le test sur le connecteur selon l'invention a été effectué avec des paramètres plus "agressifs" ; en effet, un laser YAG impulsionnel de puissance (modèle IQL 40) fonctionnait avec les paramètres suivants :
- puissance moyenne : environ 1300-1400 W,
- énergie par impulsion : environ 130-140 J/impulsion (pour une durée d'impulsion de 5 millisecondes),
- puissance crête : environ 26-28 kW.

La figure 8 montre un enregistrement de la température atteinte par la pince porte-fibre (à environ 1 mm du bord de la fibre), en fonction du temps, pour trois tirs courts ainsi que pour un tir plus long.

L'essai montre, que la température se stabilise très rapidement, en un temps inférieur à 1 minute, à environ 10°C au-dessus de la température de l'eau de refroidissement.

Les creux sur la courbe correspondent aux arrêts du laser.

## Revendications

1. Dispositif de connexion pour l'injection d'un faisceau laser dans une fibre optique, caractérisé en ce qu'il comporte :
- deux demi-pinces (34, 36 ; 74, 76) destinées à recevoir une extrémité (32) de la fibre optique (30, 78) en une position de serrage,
- un corps de connecteur (38 ; 66, 72) pour recevoir les deux demi-pinces et les maintenir en position de serrage de la fibre optique,
- des moyens (40, 42, 44 ; 90, 92) de refroidissement des deux demi-pinces.

2. Dispositif selon la revendication 1, le corps (38), destiné à recevoir les deux demi-pinces, étant d'une seule pièce.

3. Dispositif selon l'une des revendications 1 ou 2, des moyens (40, 42, 44) de refroidissement du corps étant prévus, ce dernier étant alors apte à refroidir les deux demi-pinces (34, 36) par conduction.

4. Dispositif selon la revendication 2, les deux demi-pinces (34, 36) étant de forme tronconique, le corps comportant une portée (48) de forme également tronconique destiné à recevoir les deux demi-pinces.

5. Dispositif selon la revendication 4 comportant en outre des moyens (50) de réglage du serrage des deux demi-pinces (34, 36) contre la portée tronconique (48).

6. Dispositif selon la revendication 5, les moyens de réglage comportant une vis creuse (50) destinée à être vissée sur le corps (42).

7. Dispositif selon la revendication 1, le corps destiné à recevoir les deux demi-pinces, étant formé de deux parties (66, 72) ou demi-corps, chacun étant apte à recevoir une demi-pince.

8. Dispositif selon la revendication 7, un canal de circulation d'un fluide de refroidissement étant prévu dans le corps, le fluide étant amené au contact des demi-pinces (74, 76) pour venir les lécher.

9. Dispositif selon l'une des revendications 7 ou 8, comportant en outre des moyens (102) pour appuyer les demi-pinces (74, 76) contre la fibre (78), suivant une direction sensiblement perpendiculaire à un axe défini par la position de la fibre.

10. Dispositif selon la revendication 9, les moyens pour appuyer les demi-pinces contre la fibre comportant au moins un ressort (102) en compression entre l'une des deux demi-pinces (76) et celui des demi-corps (72) destiné à recevoir cette demi-pince.

11. Dispositif selon l'une des revendications 7 à 10, chaque demi-pince se présentant sous la forme d'un barillet comportant plusieurs empreintes (104-110) adaptées à des diamètres de fibres différents.

12. Dispositif selon l'une des revendications 1 à 11, le corps étant maintenu en position fixe par rapport à un laser.
